# EUROPEAN PATENT APPLICATION

(11) **EP 4 811 480 A1**
(43) Date of publication of application: **23.09.2026**
(21) Application number: 26161725.2
(22) Date of filing: 02.03.2026
(51) Int. Cl.: H01M 10/0562, H01M 4/134, H01M 4/38, H01M 4/62

(54) **SOLID-STATE BATTERY**

(30) Priority: 18.03.2025 JP 2025043980
(71) Applicant: Toyota Jidosha Kabushiki Kaisha, Toyota-shi, Aichi-ken 471-8571 (JP)
(72) Inventor: FURUYA, Ryosuke, Toyota-shi, 471-8571 (JP); YOKOI, Yuma, Toyota-shi, 471-8571 (JP)
(74) Representative: D Young & Co LLP

(57) **Abstract**

A solid-state battery includes a negative electrode including a negative electrode active material including an Si element or an Sn element and a solid electrolyte, in which the negative electrode active material includes composite particles including a plurality of particles, and a contact length between the negative electrode active material and the solid electrolyte in a 20 µm × 25 µm cross-sectional image of the negative electrode is 600 µm or more and 1600 µm or less.

## Description

### BACKGROUND OF THE INVENTION

### 1. Field of the Invention

The present disclosure relates to a solid-state battery.

### 2. Description of Related Art

As a secondary battery that can be repeatedly used by charging, practical application of a secondary battery using a solid electrolyte (hereinafter, also referred to as a solid-state battery) is under consideration. An electrode of the solid-state battery may include a solid electrolyte together with an active material to promote the movement of ions between particles of the active material within the electrode.

A negative electrode active material included in a negative electrode of a secondary battery, particularly a negative electrode active material including an Si element or an Sn element, exhibits a large volume change during charging of the battery (during ion insertion) and during discharging of the battery (during ion extraction). When the negative electrode active material repeatedly expands and contracts in volume during charging and discharging of the battery, a contact state between particles of the negative electrode active material and the solid electrolyte in the negative electrode changes, and the change has been pointed out as a cause of battery degradation. As a negative electrode active material in which a volume change during charging and discharging of the battery is suppressed, Japanese Unexamined Patent Application Publication No. 2017-054720 (JP 2017-54720 A) discloses a negative electrode active material in the form of composite particles including a plurality of primary particles, with a particle diameter and porosity falling within a specific range.

### SUMMARY OF THE INVENTION

The degradation of the solid-state battery can be suppressed to some extent by using composite particles including primary particles as the negative electrode active material, but further suppression of degradation is desired. For example, when an expansion rate of the solid-state battery during charging can be suppressed, a conductive path between the negative electrode active material and the solid electrolyte in the negative electrode is less likely to be broken, and the degradation of the solid-state battery can be effectively suppressed. The present disclosure has been made in view of the above circumstances, and an object of the present disclosure is to provide a solid-state battery in which an expansion rate of the solid-state battery during charging is suppressed.

The following embodiments are included as measures to solve the problem.
<1> A solid-state battery including a negative electrode including a negative electrode active material including an Si element or an Sn element and a solid electrolyte, in which: the negative electrode active material includes composite particles including a plurality of particles; and a contact length between the negative electrode active material and the solid electrolyte in a 20 µm × 25 µm cross-sectional image of the negative electrode is 600 µm or more and 1600 µm or less.
<2> The solid-state battery according to <1>, in which the composite particles include porous silicon particles.
<3> The solid-state battery according to <1> or <2>, in which the composite particles include crystalline silicon particles.
<4> The solid-state battery according to any one of <1> to <3>, in which the contact length is 1100 µm or more and 1500 µm or less.
<5> The solid-state battery according to any one of <1> to <4>, in which a constraint pressure variation is 0.230 MPa/mAh or less.

According to the present disclosure, a solid-state battery is provided in which an expansion rate of the solid-state battery during charging is suppressed.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:

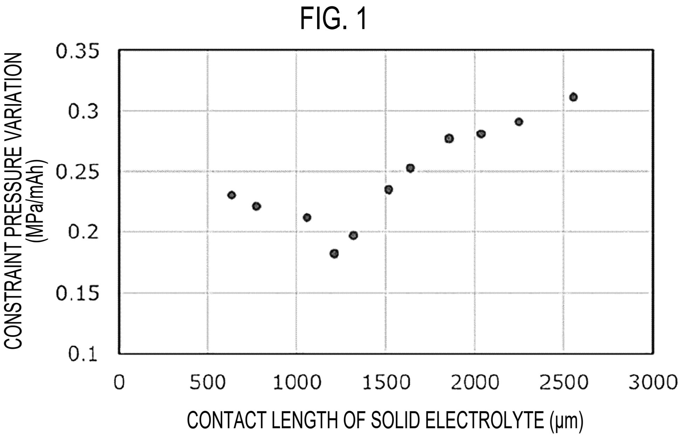

FIG. 1 is a graph showing a relationship between a constraint pressure variation and a contact length of a solid-state battery measured in examples.

### DETAILED DESCRIPTION OF EMBODIMENTS

Hereinafter, an embodiment that is an example of the present disclosure will be described. These descriptions and examples are provided to illustrate the embodiments and do not limit the scope of the present disclosure.

In the present disclosure, a numerical range represented by using "to" refers to a range including numerical values before and after "to" as a lower limit value and an upper limit value. In the numerical ranges described stepwise in the present disclosure, an upper limit value or a lower limit value described in one numerical range may be replaced with an upper limit value or a lower limit value of another stepwise-described numerical range. In addition, in the numerical ranges described in the present disclosure, the upper limit value or the lower limit value of the numerical range may be replaced with a value shown in the examples. In the present disclosure, when a plurality of materials corresponding to each component is present in a composition, the amount of each component in the composition refers to a total amount of the materials present in the composition, unless otherwise specified. In the present disclosure, a combination of two or more preferred aspects is a more preferred aspect. In the present disclosure, the "solid-state battery" refers to a secondary battery that uses at least a solid electrolyte as an electrolyte. Therefore, the solid-state battery of the present disclosure includes a battery referred to by different names such as an all-solid-state battery and a semi-solid-state battery.

### Solid-State Battery

An embodiment of the present disclosure is a solid-state battery including a negative electrode including a negative electrode active material including an Si element or an Sn element and a solid electrolyte, in which the negative electrode active material includes composite particles including a plurality of particles, and a contact length between the negative electrode active material and the solid electrolyte in a 20 µm × 25 µm cross-sectional image of the negative electrode is 600 µm or more and 1600 µm or less.

The negative electrode of the solid-state battery is generally manufactured by providing a layer of a composition including a negative electrode active material and a solid electrolyte on a current collector and then applying a pressure to the layer of the composition. Therefore, the solid electrolyte that is softer than the negative electrode active material deforms due to pressurization inside the negative electrode, and the solid electrolyte is in contact with the periphery of the particles of the negative electrode active material.

As a result of studies conducted by the present inventors, it has been found that an expansion rate of the solid-state battery during charging can be controlled by controlling the contact state between the negative electrode active material and the solid electrolyte in the negative electrode of the solid-state battery. Specifically, it has been found that, when the contact length between the negative electrode active material and the solid electrolyte in a 20 µm × 25 µm cross-sectional image of the negative electrode is 600 µm or more and 1600 µm or less, the expansion rate of the solid-state battery during charging is low. The reason for this is presumed to be, for example, as follows.

When the contact length between the negative electrode active material and the solid electrolyte in the negative electrode is 600 µm or more, the contact state between the negative electrode active material and the solid electrolyte is sufficiently secured. Therefore, non-uniform reactions that cause expansion of the solid-state battery are less likely to occur. When the contact length between the negative electrode active material and the solid electrolyte in the negative electrode is 1600 µm or less, the structure of the composite particles including the negative electrode active material is sufficiently maintained. Therefore, the expansion of individual particles constituting the composite particles is mitigated by voids within the composite particles, and the expansion of the entire negative electrode is suppressed.

In the present disclosure, the contact length between the negative electrode active material and the solid electrolyte in the 20 µm × 25 µm cross-sectional image of the negative electrode (hereinafter, also simply referred to as a contact length) is measured by the following method.

Cross-sectional images of the negative electrode are acquired using a scanning electron microscope (SEM) from cut surfaces obtained by cutting the negative electrode along a thickness direction. The cross-sectional images are acquired from the cut surfaces at any five locations on the negative electrode. A magnification of the SEM is set to 5,000 times. Next, a total length of boundary lines where a region corresponding to the negative electrode active material and a region corresponding to the solid electrolyte observed in the acquired cross-sectional image are in contact with each other is calculated. A portion where the negative electrode active material and the solid electrolyte are in contact with each other inside the negative electrode active material (that is, a portion not observed in the cross-sectional image of the negative electrode) is excluded from the calculation target of the contact length. The contact length may be calculated using image analysis software such as ImageJ (National Institutes of Health, USA). In a case of calculating the contact length, color segmentation (n-value classification, where n ≥ 2) of a region for each component observed in the cross-sectional image of the negative electrode may be performed. For example, a process (four-value classification) may be performed in which the cross-sectional image of the negative electrode is displayed in four different colors for a region corresponding to the negative electrode active material, a region corresponding to the solid electrolyte, a region corresponding to the conductive additive, and a region corresponding to voids, respectively. A machine learning system may be used for the color segmentation of the cross-sectional image of the negative electrode.

An arithmetic average value of the total length of the boundary lines where the region corresponding to the negative electrode active material and the region corresponding to the solid electrolyte are in contact with each other in the five cross-sectional images acquired from the negative electrode is defined as the contact length between the negative electrode active material and the solid electrolyte in the negative electrode.

In the solid-state battery of the present disclosure, the contact length is not particularly limited as long as the contact length is 600 µm or more and 1600 µm or less. From the viewpoint of more effectively suppressing the expansion of the solid-state battery, the contact length may be 800 µm or more, 1,000 µm or more, or 1,100 µm or more. From the viewpoint of more effectively suppressing the expansion of the solid-state battery, the contact length may be 1,500 µm or less, 1,400 µm or less, or 1,300 µm or less.

The solid-state battery of the present disclosure includes a negative electrode active material including an Si element or an Sn element. The negative electrode active material including an Si element or an Sn element can react with more Li than the negative electrode active material including a carbon material. Therefore, the capacity of the solid-state battery can be increased by using the negative electrode active material including an Si element or an Sn element.

The negative electrode active material including an Si element or an Sn element may be elemental Si or Sn, or an alloy thereof. When the negative electrode active material including an Si element or an Sn element includes other elements that do not correspond to the Si element or the Sn element, specific examples of the other elements include Fe, Co, Ni, Ti, Cr, B, and P. From the viewpoint of increasing the capacity of the solid-state battery, a content of the Si element or the Sn element included in the negative electrode active material including the Si element or the Sn element is preferably 50% by mass or more, 70% by mass or more, 90% by mass or more, or 100% by mass of all elements.

In one embodiment, the negative electrode active material may include at least one of crystalline silicon particles or porous silicon particles. In the present disclosure, the porous silicon particles refer to silicon particles having a porous structure inside the particles. A method of manufacturing the porous silicon particles is not particularly limited, and can be selected from known methods. For example, the porous silicon particles may be manufactured by selectively removing a component other than Si from silicon alloy particles including Si and a component other than Si (an Al element or the like). Alternatively, porous silicon particles may be manufactured by using Mg vapor generated by heating metallic Mg to reduce silicon oxide included in porous diatomaceous earth, thereby producing an intermediate product including Si and MgO, and then removing MgO by washing the intermediate product with an acid. An average porosity of the porous silicon particles is not particularly limited, and can be selected from a range of, for example, 30% by volume to 95% by volume. The average porosity of the porous silicon particles is measured by a mercury porosimeter.

In the present disclosure, the negative electrode active material including an Si element or an Sn element includes composite particles including a plurality of particles. The negative electrode active material including an Si element or an Sn element exhibits a larger volume expansion during charging than other negative electrode active materials such as a carbon material. When the negative electrode active material including an Si element or an Sn element is in the form of composite particles including the particles, the volume expansion of individual primary particles is mitigated by voids present inside the composite particles, and the volume expansion of the entire negative electrode active material is suppressed.

In the solid-state battery of the present disclosure, a method of manufacturing the negative electrode active material in the form of composite particles is not particularly limited, and can be selected from known methods. From the viewpoint of ease of controlling the form of the composite particles such as the particle diameter, the composite particles of the negative electrode active material are preferably manufactured by a spray drying method. In the spray drying method, a slurry obtained by mixing primary particles of the negative electrode active material, a binder for binding the primary particles, and a solvent as a liquid component is sprayed into a gas to produce liquid droplets of the slurry, and the solvent is evaporated from the liquid droplets to obtain composite particles in which a plurality of primary particles is bound together by the binder. The number of primary particles included in one composite particle is not particularly limited, and may be selected from a range of, for example, 5 to 20. A volume average particle diameter (D50) of the primary particles constituting the composite particles is not particularly limited, and may be selected from a range of, for example, 0.5 µm to 5 µm.

In the solid-state battery of the present disclosure, a method of controlling the contact length between the negative electrode active material and the solid electrolyte is not particularly limited. For example, when the negative electrode active material is manufactured by the spray drying method, the contact length in the negative electrode may be controlled depending on a type or content of components such as the negative electrode active material, the binder, and the solvent included in the slurry used for manufacturing the negative electrode active material.

In the solid-state battery of the present disclosure, the negative electrode includes a solid electrolyte. Examples of the solid electrolyte include a sulfide solid electrolyte, an oxide solid electrolyte, and a polymer solid electrolyte. From the viewpoint of performance of the secondary battery, the solid electrolyte is preferably a sulfide solid electrolyte or a polymer solid electrolyte, and from the viewpoint of thermal stability, the solid electrolyte is more preferably a sulfide solid electrolyte. The solid electrolyte included in the negative electrode may be used alone or in combination with two or more kinds thereof.

Examples of the sulfide solid electrolyte include a compound containing a metal element serving as a conducting ion and sulfur (S). Examples of the metal element include Li, Na, K, Mg, and Ca. Among these, Li is preferable as the metal element. The sulfide solid electrolyte may include Li and S, and at least one selected from the group including P, Si, Ge, Al, and B. Among these, a sulfide solid electrolyte including Li, S, and P (hereinafter, also referred to as an LPS-type sulfide solid electrolyte) is preferable. From the viewpoint of ion conductivity, the sulfide solid electrolyte may contain a halogen element such as Cl, Br, or I. From the viewpoint of chemical stability, the sulfide solid electrolyte may contain oxygen (O).

Specific examples of the LPS-type sulfide solid electrolyte include Li₂S-P₂S₅, Li₂S-P₂S₅-LiI, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, LiI-Li₂S-P₂O₅, LiI-Li₃PO₄-P₂S₅, LiBr-LiI-Li₂S-P₂S₅, Li₂S-P₂S₅-ZₘSₙ (in the formula, where m and n are each a positive number, and Z is Ge, Zn, or Ga), Li₂S-GeS₂, Li₂S-SiS₂-Li₃PO₄, and Li₂S-SiS₂-LiₓMO_{y} (in the formula, where x and y are each a positive number, and M is P, Si, Ge, B, Al, Ga, or In).

In the above, the description of "Li₂S-P₂S₅" refers to a sulfide solid electrolyte obtained using Li₂S and P₂S₅ as raw materials, and the same applies to other descriptions.

Among the LPS-type sulfide solid electrolytes, a sulfide solid electrolyte obtained using Li₂S and P₂S₅ is preferable, and a sulfide solid electrolyte satisfying the following expression is more preferable.

Li_{3+x+5y}P_{1-y}S₄ (0 < x ≤ 0.6, 0 < y ≤ 0.2)

Examples of the oxide solid electrolyte include a compound having a NASICON (Na₃Zr₂PSi₂O₁₂) type crystal structure. The compound having a NASICON-type crystal structure has a high ion conductivity and excellent stability in the air. Examples of the compound having a NASICON-type crystal structure include a phosphate containing lithium. Examples of the phosphate include a composite lithium phosphate salt with Ti (for example, Li₁₊ₓAlₓTi₂₋ₓ(PO₄)₃), and a compound in which all or a part of Ti in the composite lithium phosphate salt is substituted with a tetravalent transition metal such as Ge, Sn, Hf, or Zr, or a trivalent transition metal such as Al, Ga, In, Y, or La. Specific examples of the compound having a NASICON-type crystal structure include a Li-Al-Ge-P-O-based material (Li₁₊ₓAlₓGe₂₋ₓ(PO₄)₃), a Li-Al-Zr-P-O-based material (Li₁₊ₓAlₓZr₂₋ₓ(PO₄)₃), and a Li-Al-Ti-P-O-based material (Li₁₊ₓAlₓTi₂₋ₓ(PO₄)₃).

Examples of the polymer solid electrolyte include a mixture (complex) of a polymer compound and an electrolyte salt. Specific examples of the polymer compound include a polyether-based polymer compound such as polyethylene oxide (PEO) and polypropylene oxide (PPO), a polyamine-based polymer compound such as polyethyleneimine (PEI), and a polysulfide-based polymer compound such as polyalkylene sulfide (PAS). Among these, a polyether-based polymer compound is preferable.

In the solid-state battery of the present disclosure, the negative electrode may include a component other than the negative electrode active material and the solid electrolyte. For example, the negative electrode may include a conductive material and a binder. Examples of the conductive material include a carbon material, a metal, an oxide exhibiting conductivity, and a nitride exhibiting conductivity. Specific examples of the carbon material include graphite, carbon black (acetylene black, thermal black, furnace black, and the like), carbon nanotubes (CNT), carbon nanofibers (CNF), and vapor-grown carbon fibers (VGCF^{™}). The conductive material included in the negative electrode may be used alone or in combination of two or more kinds thereof.

Specific examples of the binder include polyvinylidene fluoride (PVdF), polyethylene, polypropylene, polyethylene terephthalate, cellulose, nitrocellulose, carboxymethyl cellulose, polyethylene oxide, polyepichlorohydrin, polyacrylonitrile, styrene-butadiene rubber (SBR), acrylonitrile-butadiene rubber (NBR), polyacrylate, polymethacrylate, and polytetrafluoroethylene (PTFE). The binder included in the negative electrode may be used alone or in combination of two or more kinds thereof.

### Layer Configuration of Solid-State Battery

The solid-state battery of the present disclosure may have a laminate in which a negative electrode current collector, a negative electrode, an intermediate layer including a solid electrolyte, a positive electrode, and a positive electrode current collector are laminated in this order. The solid electrolyte included in the intermediate layer may be the same as or different from the solid electrolyte included in the negative electrode. The positive electrode includes a positive electrode active material, and may include a solid electrolyte, a binder, a conductive additive, and the like as necessary. The solid electrolyte included in the positive electrode may be the same as or different from the solid electrolyte included in the negative electrode. The materials of the negative electrode current collector and the positive electrode current collector are not particularly limited, and can be selected from known materials.

Hereinafter, embodiments of the present disclosure will be described with reference to examples. However, the present disclosure is not limited to these examples.

### Preparation of Negative Electrode Active Material

Silicon particles were mixed with a solution obtained by dissolving or dispersing the binder in an organic solvent (dimethyl carbonate) to obtain a slurry. Using this slurry, a negative electrode active material including composite particles produced by binding the primary particles with the binder was obtained by a spray drying method. Table 1 shows a type of the silicon particles and the binder used in preparation of the negative electrode active material, as well as the content of the silicon particles and the binder in the slurry.

**Table 1**

| Negative electrode active material No. | Silicon particles | | Binder | |
|---|---|---|---|---|
| | Type | Content [% by mass] | Type | Content [% by mass] |
| 1 | Porous Si | 15 | PVdF-HFP | 13 |
| 2 | Crystalline Si | 15 | PVdF-HFP | 7 |
| 3 | Porous Si | 20 | PVdF-HFP | 13 |
| 4 | Porous Si | 10 | PVdF-HFP | 13 |
| 5 | Crystalline Si | 10 | PVdF-HFP | 7 |
| 6 | Crystalline Si | 15 | SBR | 7 |
| 7 | Crystalline Si | 20 | PVB | 7 |
| 8 | Porous Si | 15 | SBR | 13 |
| 9 | Porous Si | 20 | PVB | 13 |
| 10 | Porous Si | 15 | PVB | 13 |
| 11 | Crystalline Si | 15 | PVB | 7 |

Details of the materials shown in Table 1 are as follows.
Porous Si: porous silicon particles, D50: 1.0 µm, BET specific surface area: 150 m²/g
Crystalline Si: crystalline silicon particles, D50: 1.0 µm, BET specific surface area: 10 m²/g
PVdF-HFP: poly(vinylidene fluoride-co-hexafluoropropylene)
SBR: styrene-butadiene rubber
PVB: polyvinyl butyral

### Preparation of Laminate A

The organic solvent (tetralin), the binder (PVdF), the negative electrode active material (10 wt.%) described above, the conductive additive (VGCF), and the solid electrolyte (Li₂S-P₂S₅) were mixed and kneaded using an ultrasonic homogenizer to obtain a composition for producing a negative electrode layer. The composition was applied onto a Cu foil serving as a negative electrode current collector to produce a negative electrode layer. As a result of the above steps, a laminate A in a state where a negative electrode layer was produced on the negative electrode current collector was obtained.

### Preparation of Laminate B

The organic solvent (butyl butyrate), the binder (PVdF), and the solid electrolyte (Li₂S-P₂S₅) were mixed and kneaded using an ultrasonic homogenizer to obtain a composition for producing an intermediate layer. The composition was applied onto an Al foil serving as a temporary support to produce a solid electrolyte layer (SE layer). As a result of the above steps, a laminate B in a state where an SE layer was produced on the temporary support was obtained.

### Preparation of Laminate C

The organic solvent (2,6-dimethyl-4-heptane), the binder (PVdF), the positive electrode active material (LiNi_{0.8}Co_{0.15}Al_{0.05}O₂), the conductive additive (VGCF), and the solid electrolyte (Li₂S-P₂S₅) were mixed and kneaded using an ultrasonic homogenizer to obtain a composition for producing a positive electrode layer. The composition was applied onto an Al foil serving as a positive electrode current collector to produce a positive electrode layer. As a result of the above steps, a laminate C in a state where a positive electrode layer was produced on the positive electrode current collector was obtained.

### Preparation of Evaluation Battery

The laminate A and the laminate B were overlapped such that the negative electrode layer and the SE layer were in contact with each other, and roll-pressed under conditions of 50°C and 50 kN/cm to transfer the SE layer onto the negative electrode layer. The temporary support of the laminate B was removed to obtain a laminate having a layer configuration of SE layer 1/negative electrode layer/negative electrode current collector. Another SE layer was transferred onto the SE layer by the same method as described above to obtain a negative electrode laminate having a layer configuration of SE layer 2/SE layer 1/negative electrode layer/negative electrode current collector. The laminate C and the laminate B were overlapped such that the positive electrode layer and the SE layer were in contact with each other, and roll-pressed under conditions of 165°C and 50 kN/cm to transfer the SE layer onto the positive electrode layer. The temporary support of the laminate B was removed to obtain a positive electrode laminate having a layer configuration of SE layer 3/positive electrode layer/positive electrode current collector. The negative electrode laminate punched into a circular shape having a diameter of 13.00 mm and the positive electrode laminate punched into a circular shape having a diameter of 11.28 mm were overlapped to obtain a battery laminate having a layer configuration of negative electrode current collector/negative electrode layer/SE layer 1/SE layer 2/SE layer 3/positive electrode layer/positive electrode current collector. Current-collecting tabs were attached to the positive electrode layer and the negative electrode layer, and the battery laminate was sealed in an exterior body made of an aluminum laminated film. The battery laminate sealed in the exterior body was sandwiched between two constraint plates and constrained at a pressure of 5 MPa to prepare an evaluation battery.

### Measurement of Contact Length

The evaluation battery was cut along the thickness direction, and a cross-sectional image of the negative electrode was acquired using an SEM (magnification: 5,000 times). A process of displaying, in four colors, regions respectively corresponding to the negative electrode active material, the solid electrolyte, the conductive additive, and voids observed in the acquired cross-sectional image (20 µm × 25 µm) of the negative electrode was performed using machine learning. Next, a total length of boundary lines where a region corresponding to the negative electrode active material and a region corresponding to the solid electrolyte observed in the cross-sectional image were in contact with each other was calculated using ImageJ (National Institutes of Health, USA). A portion where the negative electrode active material and the solid electrolyte were in contact with each other inside the negative electrode active material was excluded from the calculation target of the contact length. Table 2 shows an average value of the contact length calculated for each of the cross-sectional images of the negative electrode acquired from the cut surfaces at five arbitrarily selected locations on the negative electrode.

### Evaluation of Battery Expansion Amount

The battery was charged in a state where the distance between the constraint plates was fixed, and a difference between the constraint pressure when the battery was charged to 4.05 V and the constraint pressure (5 MPa) before charging was measured. The measured value of the constraint pressure measured at the point when the Si charge amount reached 1000 mAh was normalized by the capacity of the evaluation battery. The battery expansion amount was evaluated according to the following criteria based on the measured value of the constraint pressure variation.
A: The constraint pressure variation is less than 0.200 MPa/mAh
B: The constraint pressure variation is 0.200 MPa/mAh or more and less than 0.250 MPa/mAh.
C: The constraint pressure variation is 0.250 MPa/mAh or more.
The larger the value of the constraint pressure variation, the larger the expansion amount of the battery during charging is considered to be. The results are shown in Table 2 and FIG. 1.

**Table 2**

| Battery No. | Negative electrode active material | Contact length [µm] | Constraint pressure variation [MPa/mAh] | Evaluation |
|---|---|---|---|---|
| 1 | 1 | 1210 | 0.183 | A |
| 2 | 2 | 1320 | 0.197 | A |
| 3 | 3 | 1857 | 0.277 | C |
| 4 | 4 | 2553 | 0.311 | C |
| 5 | 5 | 1638 | 0.253 | C |
| 6 | 6 | 773 | 0.221 | B |
| 7 | 7 | 1518 | 0.235 | B |
| 8 | 8 | 632 | 0.23 | B |
| 9 | 9 | 1059 | 0.212 | B |
| 10 | 10 | 2249 | 0.291 | C |
| 11 | 11 | 2037 | 0.281 | C |

As shown in Table 2 and FIG. 1, the batteries Nos. 1, 2, 6, 7, 8, and 9 in which the contact length between the negative electrode active material and the solid electrolyte was within a range of 600 µm or more and 1600 µm or less, exhibited more suppressed expansion during charging compared with the batteries Nos. 3, 4, 5, 10, and 11 in which the contact length between the negative electrode active material and the solid electrolyte was outside the range of 600 µm or more and 1600 µm or less.

## Claims

1. A solid-state battery comprising a negative electrode including a negative electrode active material including an Si element or an Sn element and a solid electrolyte, wherein:
the negative electrode active material includes composite particles including a plurality of particles; and
a contact length between the negative electrode active material and the solid electrolyte in a 20 µm × 25 µm cross-sectional image of the negative electrode is 600 µm or more and 1600 µm or less.

2. The solid-state battery according to claim 1, wherein the composite particles include porous silicon particles.

3. The solid-state battery according to claim 1, wherein the composite particles include crystalline silicon particles.

4. The solid-state battery according to claim 1, wherein the contact length is 1100 µm or more and 1500 µm or less.

5. The solid-state battery according to claim 1, wherein a constraint pressure variation is 0.230 MPa/mAh or less.
